# EUROPEAN PATENT SPECIFICATION

(11) **EP 0 388 117 B1**
(45) Date of publication and mention of the grant of the patent: **18.08.1993**
(21) Application number: 90302603.7
(22) Date of filing: 12.03.1990
(51) Int. Cl.: F16B 19/10, B21J 15/04, B21J 15/10

(54) **Method and apparatus for pull-through blind installation of a tubular member**
Verfahren und Apparat für eine Durchzieh-Blindinstallation eines röhrenförmigen Elementes
Méthode et appareillage pour faire passer l'installation aveugle d'un élément tubulaire

(30) Priority: 17.03.1989 GB 8906231
(43) Date of publication of application: 19.09.1990
(73) Proprietor: AVDEL SYSTEMS LIMITED, Welwyn Garden City Hertfordshire AL7 1EZ (GB)
(72) Inventor: Denham, Keith, Welwyn Garden City, Hertfordshire (GB); Miles, Michael, Stevenage, Hertfordshire (GB)
(74) Representative: Treacher, Alan Leslie

(56) References cited:
- EP-A- 0 065 111
- DE-A- 2 354 315
- DE-A- 2 952 665
- DE-A- 3 612 501
- GB-A- 578 104

## Description

Blind installation of a tubular member in a workpiece is installation by access to one side only of the workpiece. One method of blind installation is the so-called pull-through method, which essentially comprises pulling an oversize mandrel head through the bore of the tubular member. In use, the tubular member is inserted in a hole in a workpiece in which the outside of the member is a fairly close radial fit. It is installed by pulling through the bore the head of a mandrel, the mandrel head having a greater external diameter than at least part of the bore (the term "diameter" is used because the tubular bore and the mandrel head are usually both circular in cross-section, although not necessarily so). The passage of the mandrel head through the bore thus radially expands at least part of the bore and the corresponding part of the exterior of the tubular member, thereby deforming the tubular member into engagement with the workpiece in which it is inserted. The remote end of the tubular member usually protrudes from the rear face of the workpiece and is expanded to form a blind head. The mandrel is removed completely from the bore and forms no part of the installed member. Examples of such tubular members are the blind tubular rivets commercially available in many countries of the world under the Registered Trade Marks CHOBERT and BRIV.

When the head of the mandrel is pulled through a tubular member, the member must be supported axially against the axial force exerted on it by the mandrel head. This is done by means of an annular anvil, the annular face of which contacts the end of the tubular member, the mandrel stem extending through the aperture in the centre of the annular anvil. Since the tubular member is in contact with the anvil, and the mandrel head has to be pulled completely through the bore, the anvil aperture has to be of a sufficient diameter to allow the head of the mandrel to enter it and pass through it. Thus the diameter of the anvil aperture is larger than the diameter of the bore of the tubular member (or at least of that part of the bore which is radially expanded by the mandrel head).

Tubular members of the blind tubular rivet type available under the Registered Trade Marks CHOBERT and BRIV have an enlarged preformed head at one end, which head contacts the accessible face of the workpiece. In use, the tubular member is axially supported as aforesaid by contact of the anvil of the installation apparatus (usually referred to as a placing tool) with the preformed head of the member. The annular anvil can support the member by contact with the enlarged preformed head outside the workpiece, around an annular zone surrounding the anvil aperture, which zone may be spaced radially outwardly from the bore and provides no restrictions on making the anvil aperture sufficiently large to accommodate the mandrel head.

Pull-through blind installation apparatus operating in this way has been well known for many years in the art of mechanical assembly, for installing the aforementioned blind tubular rivets available under the Registered Trade Marks CHOBERT and BRIV.

In this prior art apparatus, the practice has been for a column of rivets to be loaded onto the mandrel, behind the anvil. In order to feed the next rivet along the mandrel stem to the front of the anvil, the anvil is split longitudinally into two parts along a plane containing the mandrel axis. These two parts are referred to as "jaws", since their shape and movement resemble those of a pair of jaws, although these anvil parts do not usually perform any gripping operation. When the mandrel head has been withdrawn through the anvil aperture, the column of rivets on the mandrel stem is urged forwards so that the leading rivet contacts the mandrel head. The mandrel head and the leading rivet are urged forwards so that they force the anvil jaws apart and allow the leading rivet through the thus enlarged anvil aperture. The anvil jaws then close behind the head of the leading rivet and around its shank, in the axial space behind that head and in front of the head of the next succeeding rivet, ready to provide axial support to the leading rivet when it is placed (GB-A-578 104).

There has now arisen a requirement to instal a tubular member in the form of a tubular ferrule, having no preformed enlarged head, with the nearer end of the ferrule at a distance inside the hole in the workpiece. The ferrule has a relatively thin wall, and in order to axially support the ferrule against the passage of the mandrel head as explained above, it is necessary for the anvil to support the end of the ferrule wall across substantially the full thickness thereof. Thus the anvil aperture can be no larger in diameter than the ferrule bore. Consequently the mandrel head (or at least that part of it which is of the largest diameter and which is effective to expand the ferrule) cannot pass into and through the anvil aperture. Since the anvil is inside the workpiece hole, there is no room to open the jaws as has been the practice in the prior art. Furthermore, since the tubular ferrule, when in the installation apparatus before installation, is headless and of uniform external diameter, there is no head on the leading ferrule behind which the anvil jaws could close, as described in the prior art apparatus described above. Thus it would not be possible to reliably separate the leading ferrule from the following one as the leading ferrule is fed through the anvil jaws, so that the split jaws could not be arranged to close behind the leading ferrule.

These restrictions present problems, which the present invention seeks to overcome.

The invention provides, in one of its aspects, a method of pull-through blind installation of a tubular member in a hole in a workpiece, which method comprises:-
positioning the tubular member on the stem of a pull-through mandrel which has a head at least part of which is of larger diameter than at least part of the bore of the tubular member;
inserting the mandrel and tubular member into a hole in a workpiece in which the tubular member is to be installed, with the nearer end of the tubular member (i.e. the end remote from the mandrel head) inside the workpiece hole and at a distance from the nearer face thereof;
supporting the nearer end of the tubular member by means of an annular anvil face which overlies substantially all of the nearer end of the tubular member;
drawing the mandrel head through part of the bore of the tubular member thereby to expand at least the more remote part of the tubular member into engagement with the workpiece;
and withdrawing the annular anvil from the workpiece hole to allow the mandrel head to pass completely through the remainder of the bore of the tubular member, the tubular member then being axially supported by its aforesaid engagement with the workpiece.

The invention also provides apparatus for the pull-through blind installation of a tubular member in a hole in a workpiece at a position therealong spaced from the nearer face of the workpiece, which apparatus comprises:-
an annular anvil for supporting a tubular member inside the workpiece hole;
anvil supporting means for initially supporting the anvil at a position inside the workpiece hole;
a mandrel having a stem extending through the anvil aperture and an enlarged head;
retraction means for retracting the mandrel stem through the anvil aperture thereby to draw the mandrel head into the adjacent part of the bore of the tubular member whilst the tubular member is supported inside the workpiece hole by the annular anvil, thereby to enlarge at least the part of the tubular member more remote from the anvil into engagement with the workpiece;
and means for withdrawing the anvil axially away from the tubular member to allow the mandrel head to be withdrawn completely through the remainder of the bore of the tubular member.

Further features of the invention will be apparent from the following description and the appended claims.

A specific embodiment of the invention, in the form of a pull-through installation apparatus, and methods of pull-through installation, will now be described by way of example and with reference to the accompanying drawings, in which:-
Figure 1 is an axial longitudinal section through a pneumatically operated apparatus for pull-through blind installation of a tubular ferrule in a workpiece hole;
Figures 2, 3 and 4 are enlargements of part of Figure 1, showing successive stages in the operation of the anvil and mandrel head in installing a ferrule;
Figures 5 and 6 show how the mandrel is withdrawn from the rest of the apparatus for reloading with a further ferrule, and re-inserted in the apparatus;
Figure 7 is a schematic pneumatic circuit diagram of part of the control system for the installation apparatus; and
Figure 8 is similar to Figure 1 but shows an alternative arrangement for withdrawing the anvil.

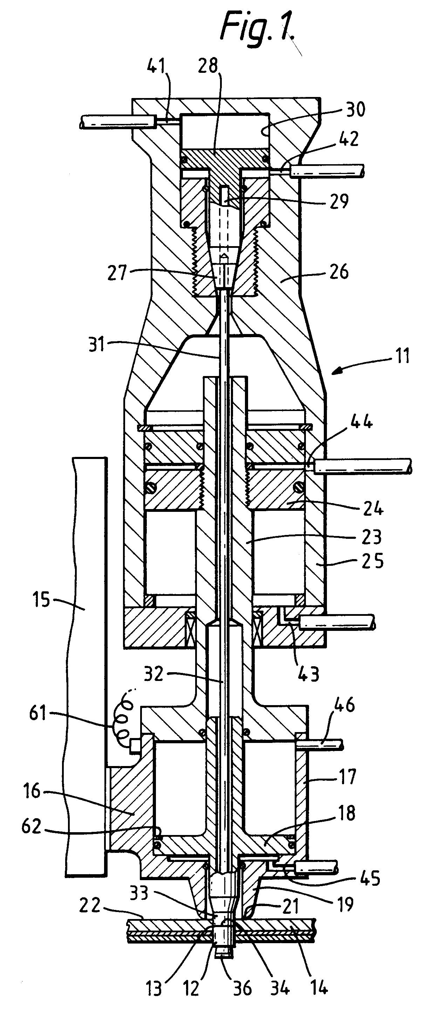

The installation apparatus illustrated in Figure 1 is in the form of a pneumatically operated tool 11 for installing a tubular member in the form of an initially headless ferrule 12. The ferrule is to be installed in a hole 13 in a workpiece 14 which, in this example, comprises a number sheets of different materials.

The tool is supported on a frame 15 so that it can be brought into the correct relationship with the workpiece to position the ferrule in the workpiece hole. The part of the tool which is secured to the frame is the body 16, which comprises a pneumatic cylinder 17 in which reciprocates a nosepiece piston 18. Protruding downwards from the centre of the bottom of the nosepiece cylinder 17 is a workpiece-contacting boss 19, the lower rim 21 of which, in use, contacts the upper face 22 of the workpiece 14. Protruding upwards from the centre of the top of the cylinder 17 is an axial tubular extension 23 which acts as piston rod. Fixed to it is a piston 24, on which reciprocates a pulling cylinder 25. The pulling cylinder is extended upwards to form a tail-jaw housing 26 which carries pneumatically operated tail jaws 27 which can grip the tail end of a mandrel. The tail jaws are actuated by a piston 28 secured to the end of a jaw-pusher tube 29 and reciprocable in a tail-jaw cylinder 30.

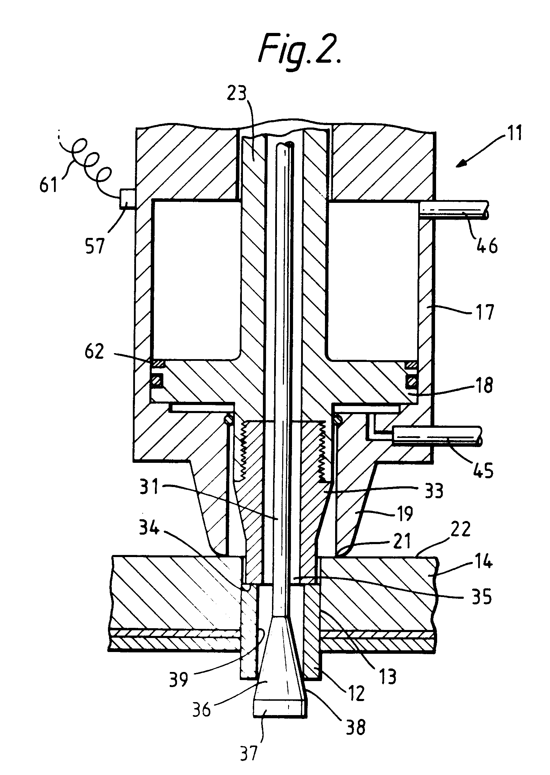

The tail jaws 27 grip the tail end of the stem 31 of a mandrel 32. The stem extends down through an axial bore in the extension 23, through an axial bore in the nosepiece piston 18 and its downwards extension in the form of a tubular nosepiece 33 which provides at its bottom end an annular ferrule-supporting anvil 34. The nosepiece 33 and anvil 34 are not split longitudinally into a number of portions which can be moved apart to enlarge the anvil aperture, as in the prior art tools referred to previously, but are circumferentially continuous. The anvil surrounds an aperture 35 (Figure 2) through which the mandrel stem extends. The mandrel includes an enlarged head 36 which is formed integrally with the stem 31. In this example, as illustrated in Figure 2, the mandrel head is in the form of a short section 37 of maximum diameter, joined to the stem 31 by a relatively long, relatively shallow tapering section 38 (in this example, the included angle of the taper is about twenty five degrees). The maximum diameter of the head at section 37 is larger than the internal diameter of the bore 39 of the ferrule 12, so that when the ferrule is loaded on the mandrel stem 31 and urged against the mandrel head, the end of the ferrule stops about two thirds of the way along the mandrel head taper 38. As also illustrated in Figure 2, the annular anvil surface 34 substantially overlies the other end face of the ferrule. In this example the outside diameter of the anvil 34 is about the same as the outside diameter of the ferrule 12, whilst the inside diameter of the anvil 34 (that is, the diameter of anvil aperture 35) is slightly less than the diameter of the ferrule bore 39. Thus the diameter of the mandrel head at 37 is substantially larger than the diameter of the anvil aperture 35.

As previously mentioned, the installation tool 11 is pneumatically operated. Referring again to Figure 1, the tail cylinder 30 is double acting, and is provided with two ports 41 and 42. When the port 41 is pressurised and the part 42 is vented (as illustrated in Figure 1), the jaw pusher 29 is urged downwards, to push the jaws 27 in to their tapered housing and urged them together to grip the tail end part of the mandrel stem 31 between them. When the port 41 is vented and the port 42 is pressurised, the jaw pusher tube 29 is pulled upwardly and releases the jaws 27, which are pushed apart by a spring and release their grip on the mandrel stem.

The main pulling cylinder 25 is also double-acting, and is provided with two ports 43 and 44. When port 43 pressurised and port 44 is vented (as illustrated in Figure 1), the pulling cylinder 25 is urged downwards, so that the relative positions of the mandrel head 36 and anvil 34 are as illustrated in Figures 1 and 2. When the port 43 is vented and port 44 is pressurised, the pulling cylinder 25 is driven upwardly, carrying with it the tail jaw housing 26, tail jaws 27 and mandrel 32.

The nosepiece cylinder 17 in this example is double acting. It has a lower port 45 and an upper port 46. When port 46 is pressurised and port 45 is vented (as illustrated in Figure 1), the nosepiece piston 18 is pushed downwardly against the lower end wall of the cylinder 17, so that the nosepiece 33 is held in a predetermined position in relation to the body 16 and the lower rim 21 of the workpiece contacting boss 19.

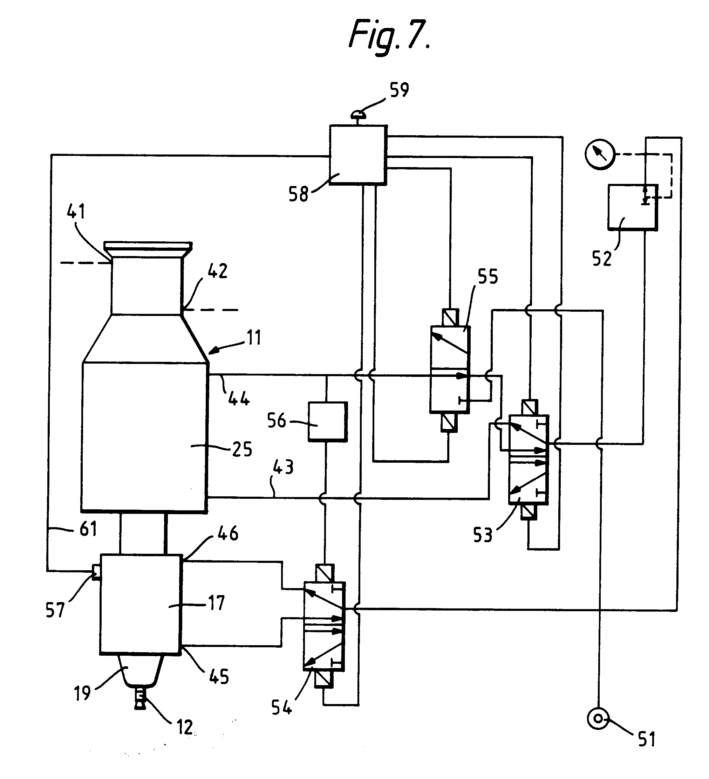

Figure 7 shows part of the pneumatic control circuit associated with the installation apparatus. As illustrated in Figure 7, the circuit includes an air inlet connector 51, a pressure reducing valve 52, a first change over valve 53 for controlling the pulling cylinder 25, a second changeover valve 54 for controlling the nosepiece cylinder, and a high pressure/low pressure changeover valve 55 for altering the air pressure applied to the top of pulling cylinder 25. The control circuit also includes a pressure-sensitive switch 56 and associated output circuitry for controlling the nosepiece changeover valve 54, a position sensor 57 mounted near the upper end of nosepiece cylinder 17, and an electronic control unit 58 provided with a sequence starting switch 59. The control system also includes other elements which are not relevant to the present invention and are therefore not shown.

The pressure-sensitive switch 56 detects when the pressure applied via port 44 to the top of pulling cylinder 25 reaches a predetermined value, that is to say, when the tension applied to withdraw the mandrel head 36 through the ferrule bore reaches a predetermined value. The position sensor 57, which is a reed-switch sensitive to the proximity of an annular magnet 62 mounted on the nosepiece piston 18, detects when the nosepiece piston is in the fully raised position, that is to say when the nosepiece 33 has been fully withdrawn from the workpiece hole. The sensor 57 is connected by an electrical lead 61 to the electronic unit 58.

The tool is prepared for use to instal a ferrule by removing the mandrel 32 from the tool, loading a single ferrule 12 on to the mandrel stem, and re-inserting the mandrel in the tool (this sequence of steps will be described in detail later). The various parts of the tool 11 are then disposed as illustrated in Figures 1 and 2. The ferrule 12 is held between the annular anvil 34 and the taper 38 on the mandrel head 36. The length of the nosepiece 33 in relation to the length of the boss 19 is pre-selected as required, as will also be described later. By moving and positioning the tool frame 15 in relation to the workpiece 14, the mandrel head 36, ferrule 12 and the free end of the nosepiece 33 are inserted into the workpiece hole 13, as illustrated in Figure 2. (If the workpiece is smaller and lighter than the tool, the tool could be fixed and the workpiece would be moved towards and away from the tool). The tool is positioned in relation to the workpiece 14 with the end 21 of the boss 19 contacting the nearer face 22 of the workpiece 14. In this position, the end of the nosepiece 33 is inside the workpiece hole 13 so that the annular anvil is at a predetermined distance from the nearer face 22 of the workpiece, in this example about one quarter of the length of the workpiece hole. It is held in this relationship by the pressure of the air in the space above it piston 18, as described above. The remote end part of the ferrule 12 (in this example, about one quarter of the length of the ferrule) protrudes beyond the far face of the workpiece 14.

Whilst the tool is held in this position, the condition of the various valves in the control system is illustrated in Figure 7. The changeover valve 53 is supplying low pressure air, coming via pressure reduction valve 52, to the bottom of pulling cylinder 25, via port 43.

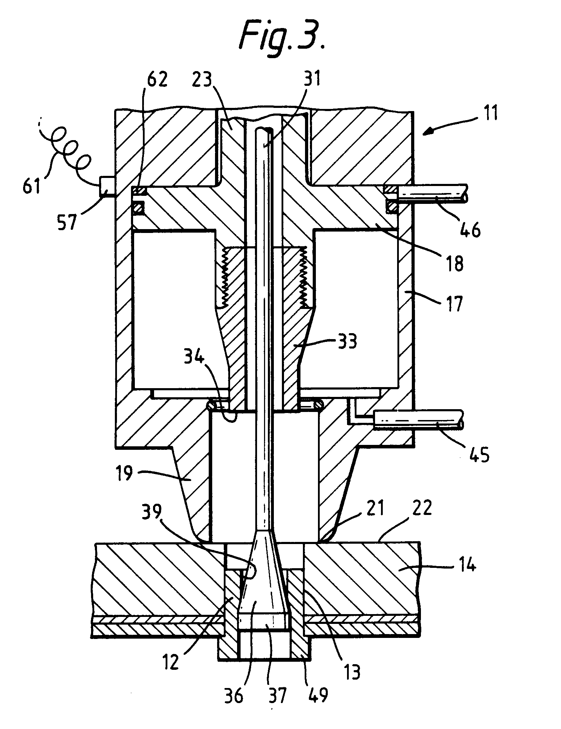

The installation sequence is now initiated by operating switch 59, which actuates the control unit 58 to change the valve 53. The pulling cylinder 25 is actuated, by supplying air at low pressure via port 44 to the space above piston 24 whilst venting the space below piston 24 via port 43. This causes the cylinder 25 to rise up the piston 24, which is fixed to the frame 15. This carries the housing 26 and jaws 27 upwards, with the jaws still gripping to the tail end of the mandrel 32. This in turn starts to draw the head 36 of the mandrel 32 upwardly into the bore 39 of the ferrule 12. The ferrule is supported against upwards axial movement by engagement of the annular anvil 34 with its upper end face. The entry of the tapered face 36 of the mandrel head causes the ferrule to expand radially, starting at its bottom end and moving progressively upwards. The lower most end part of the ferrule 12, which protrudes beyond the workpiece, is radially enlarged to form a blind head 49 (Figure 3), which is larger in diameter than the workpiece hole and engages the rear face of the workpiece.

When the widest part 37 of the mandrel head starts to enter within the workpiece 14, the resistance to its withdrawal through the ferrule bore 39 increases, because radial enlargement of the ferrule is restricted by the wall of the workpiece hole 13. Consequently the pressure within the top part of the pulling piston rises, increasing with the increasing tension on the mandrel stem. When the air pressure rises to a value which corresponds to sufficient mandrel tension to have ensured formation of the blind head 39 on the ferrule, the pressure sensitive switch 56 (which has been pre-adjusted to this value) closes. This causes its associated electrical circuitry to output an electrical signal which causes the nosepiece changeover valve 54 to change.

This vents the port 46 and pressurises the port 45 with high pressure air from the connector 51. The nosepiece piston 18 rises quickly, so that the nosepiece 33 is withdrawn upwards, out of contact with the ferrule, and out of the workpiece hole 13.

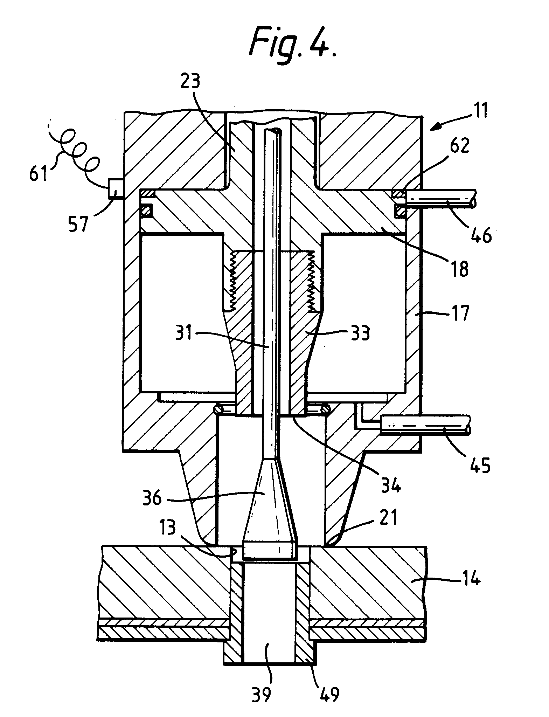

When the nosepiece piston 18 reaches the top of its travel, this is detected by the proximity sensor 57. This sends an electrical signal (indicating that the nosepiece 33 has been completely withdrawn) to the electronic control unit 58. In response to this the control unit generates an electrical output signal, which causes the high/low pressure changeover valve 55 to change. This changes the feed to the upper part of the pulling cylinder 25, from low pressure (from pressure reduction valve 52) to high pressure (from inlet connector 51). This substantially increases the withdrawal force applied to the mandrel 31. The mandrel head 36 moves further upwards, through the remainder of the ferrule bore, expanding the ferrule radially outwards into engagement with the wall of the workpiece hole. The engagment between the mandrel head 36 and the wall of the ferrule bore 39 tends to drag the ferrule upwards with the mandrel head, but movement of the ferrule is resisted by the abutment of the blind head 49, which has been formed first, with the rear face of the workpiece. The mandrel continues to move upwards, until its head has been drawn completely through the ferrule bore, as illustrated in Figure 4, thus installing the ferrule in the workpiece. The workpiece 14 is now removed from contact with the rim 21, and the mandrel 32 and anvil 34 returned to their original position by reversing the cylinder 25, i.e. by venting the port 44 and pressurising the port 43 with low pressure air, and thus reversing the piston 18.

When the mandrel head 36 is pulled through the ferrule, it squeezes the ferrule radially outwardly against the workpiece hole wall, and causes a reduction in thickness of the ferrule wall. This has the effect of causing an axial elongation of the ferrule, which is apparent from a comparison of the relative positions of the upper end of the ferrule in Figure 2 (before installation) and Figure 4 (after installation).

In the present example, the installation apparatus and the method using it are arranged to fulfil a requirement that the upper end of the ferrule 12, after installation, is at a predetermined distance below the upper face 22 of the workpiece 14. This is achieved by arrangement the initial position of the anvil, and thus the initial position of the upper end of the ferrule, to be at a second predetermined distance below the upper face of the workpiece. The second predetermined distance is greater than the first predetermined distance by an amount equal to the increase in length of the ferrule on installation.

The ferrule thus having been installed in a workpiece, it is now necessary to reload a further ferrule on to the mandrel, ready for installation. This is done as follows.

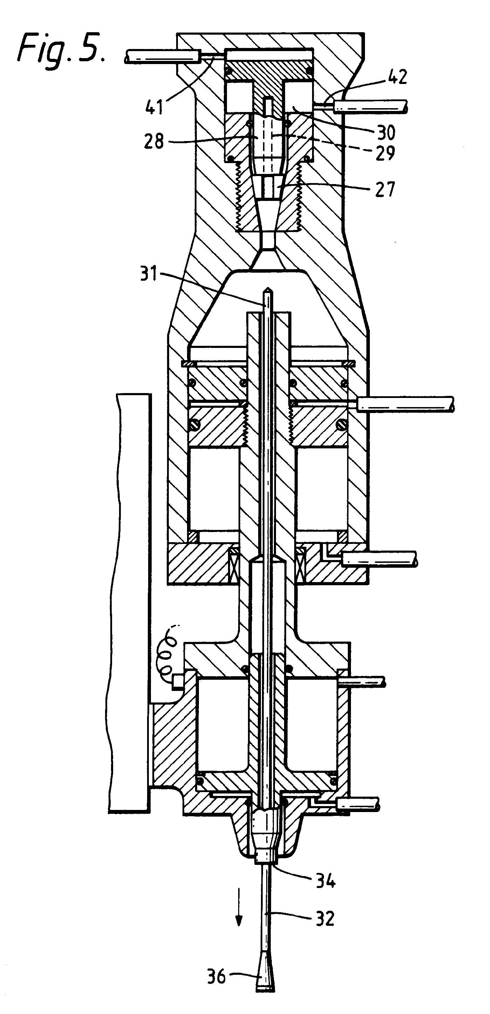

The tool is moved clear of the workpiece (or, as mentioned previously, the workpiece is moved clear of the tool). The grip of the tool on the mandrel 32 is released by venting the port 41 of the tail jaw cylinder 30 and pressurising the port 42. This moves the piston 28 and tail jaw pusher 29 upwards, releasing the force on the tail jaws 27 and allowing them to move apart under the urging of a spring (not shown), thus releasing their grip on the mandrel. The empty mandrel 32 can then be withdrawn downwardly from the tool, through the anvil aperture 34, as illustrated in Figure 5.

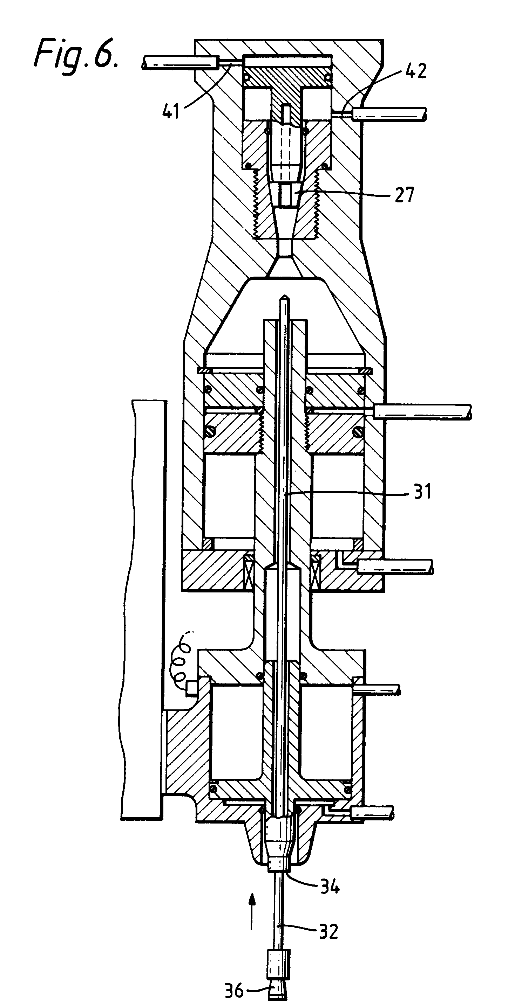

A further ferrule 12 can then be loaded on to the mandrel 32 over the tail end of the stem 31, as illustrated in Figure 6. It is passed along the mandrel stem until it contacts the tapered face 38 of the mandrel head 36. The mandrel is then re-inserted through the anvil aperture 34. The mandrel is inserted into the tool until the mandrel head 36 traps the ferrule 12 against the anvil 34. The mandrel is then re-engaged by closing the tail jaws 27 to grip it, by venting the port 42 and pressurising the port 41. The tool is then ready to instal the further ferrule 12.

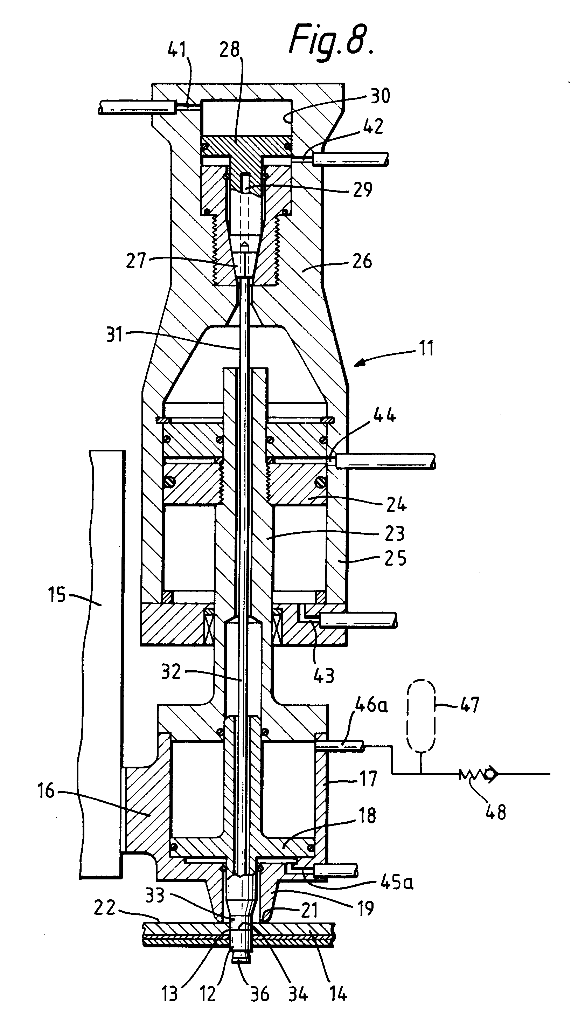

Figure 8 illustrates a modification of the tool illustrated in Figure 1. In the modified tool, the nosepiece piston 18 is not advanced and retracted positively, but instead is advanced by resilient urging of an air spring. The inlet port 46A is connected to a pneumatic accumulator 47 and is fed through an non-return restrictor valve 48 (both shown symbolically in Figure 8). The effect of the pneumatic accumulator 47 is to act as a pneumatic spring which resiliently urges downwards the nosepiece piston 18 into the aforesaid predetermined relationship with the body 16 and the lower rim 21 of the boss 19.

When the mandrel is withdrawn upwardly, the narrow end of the tapered part 38 of the mandrel head then enters into the anvil aperture 35, until the tapered part of the mandrel head engages the anvil 34. The upward force on the mandrel head 36, due to the air pressure in the top part of pulling cylinder 25, is greater than the downwards force on the nosepiece 33 due to the resilient urging of the air pressure in cylinder 17 above the nosepiece piston 18. Consequently the upwardly moving mandrel head 36 picks up the nosepiece 33 and the nosepiece travels upwards with the mandrel head.

However, it is believed that the positive prior withdrawal of the nosepiece, without contact by the mandrel head, is preferable, since repeated contact could cause wear to the nosepiece. In the example illustrated in Figure 1, the stroke of the nosepiece piston 18 is greater than the stroke of the pulling cylinder 25, so that once the nosepiece has been fully withdrawn the mandrel head cannot contact it.

The invention is not restricted to the details of the foregoing example. For instance it will be apparent to those skiled in the art of pneumatic systems that the control system can incorporate other features which have not been described above.

## Claims

1. A method of pull-through blind installation of a tubular member in a hole in a workpiece, comprising the steps of:-
positioning the tubular member (12) on the stem (31) of a pull-through mandrel (32) which has a head (36) at least part (37) of which is of larger diameter than at least part of the bore (39) of the tubular member (12);
inserting the mandrel (32) and tubular member (12) into a hole (13) in a workpiece (14) in which the tubular member (12) is to be installed, with the nearer end of the tubular member , i.e. the end remote from the mandrel head, inside the workpiece hole (39) and at a distance from the nearer face (22) thereof;
supporting the nearer end of the tubular member by means of an annular anvil (34) which overlies substantially all of the nearer end of the tubular member (12);
drawing the mandrel head (36) through part of the bore (39) of the tubular member (12) thereby to expand at least the more remote part (49) of the tubular member (12) into engagement with the workpiece (14);
and withdrawing the annular anvil (34) from the workpiece hole (39) to allow the mandrel head (36) to pass completely through the remainder of the bore (39) of the tubular member (12), the tubular member (12) then being axially supported by its aforesaid engagement (49) with the workpiece.

2. A method as claimed in claim 1, further including the step of detecting when the withdrawal load applied to the mandrel (32) reaches a predetermined value, thereby to initiate withdrawal of the anvil (34) as aforesaid.

3. A method as claimed in claim 1 or claim 2, further including the step of increasing the force applied to the mandrel (32) to draw its head (36) through the remainder of the bore (39) of the tubular member (12), after the annular anvil (34) has been withdrawn from the workpiece hole (13) as aforesaid.

4. A method as claimed in claim 3, further including the step of detecting when the annular anvil (34) has been withdrawn from the workpiece hole (13), thereby to initiate increasing the force applied to the mandrel (32) as aforesaid.

5. A method as claimed in claim 1, in which withdrawal of the annular anvil (34) is effected by engagement of the mandrel head (36) with the anvil (34) as the mandrel head (36) is withdrawn as aforesaid.

6. A method as claimed in any of the preceding claims, in which the tubular member (12) is inserted into the hole (13) in the workpiece (14) so as to protrude from the remote end thereof, and in which expansion of the protruding part forms a blind head (49) behind the workpiece.

7. A method as claimed in any of the preceding claims, in which withdrawal of the mandrel head (36) through the bore (34) of the tubular member (12) causes elongation of the tubular member, so that nearer end thereof after installation is at a lesser distance from the nearer face (22) of the workpiece (14) than it was initially (Figure 4), and in which, in order to obtain an installed tubular member (12) with the nearer end thereof at a first predetermined distance from the nearer face (22) of the workpiece, the nearer end of the tubular member (12) is initially positioned inside the workpiece hole (39) at a second predetermined distance from the nearer workpiece face (22) which second predetermined distance is greater than the fast predetermined distance (Figure 2).

8. Apparatus for the pull-through blind installation of a tubular member in a hole in a workpiece at a position therealong spaced from the nearer face of the workpiece, which apparatus comprises:-
an annular anvil (34) for supporting a tubular member (12) inside the workpiece hole (39);
anvil supporting means (17,18,19) for initially supporting the anvil (34)at a position inside the workpiece hole (39);
a mandrel (32) having a stem (31) extending through the anvil aperture and an enlarged head (36);
retraction means (24, 25) for retracting the mandrel stem (31) through the anvil aperture (35) thereby to draw the mandrel head (36) into the adjacent part of the bore (39) of the tubular member (12) whilst the tubular member (12) is supported inside the workpiece hole (39) by the annular anvil (34), thereby to enlarge at least the part of the tubular member (12) more remote from the anvil (34) into engagement with the workpiece;
and means (17, 18) for withdrawing the anvil (34) axially away from the tubular member (12) to allow the mandrel head (36) to be withdrawn completely through the remainder of the bore (39) of the tubular member (12).

9. Apparatus as claimed in claim 8, including means (56) for detecting when the withdrawal load applied to the mandrel (32) reaches a predetermined value, the load detecting means (56) being arranged to initiate withdrawal of the anvil (34) as aforesaid.

10. Apparatus as claimed in claim 8 or claim 9, including means (55) for increasing the force applied to the mandrel (32) to draw its head (36) through the remainder of the bore (39) of the tubular member (12), after the annular anvil (34) has been withdrawn from the bore (39) of the tubular member (12) as aforesid.

11. Apparatus as claimed in claim 10, including means (57, 62) for detecting when the annular anvil (34) has been withdrawn from the tubular member (12) sufficiently to allow the mandrel head (36) to be withdrawn completely from the bore (39) of the tubular member (12) as aforesaid, the anvil withdrawal detecting means (57, 62) being arranged to initiate the increase of force applied to the mandrel (32) as aforesaid.

12. Apparatus as claimed in claim 8, in which the means for withdrawing the anvil (34) away from the tubular member (12) comprises the mandrel head (36).

13. Apparatus as claimed in any of claims 8 to 12, including workpiece-contacting means (19), in which the anvil supporting means (17, 18, 19) is arranged to initially support the anvil (34) at a predetermined position in relation to the workpiece-contacting means (19), and thereby, when the workpiece-contacting means (19) is in contact with the workpiece (14), to support the anvil (34) at a predetermined position inside the workpiece hole (13), thereby initially to position the tubular member (12) at a predetermined position inside the workpiece hole (Figure 2).

## Patentansprüche

1. Verfahren zum Blindsetzen eines rohrförmigen Bauteils in einem Loch eines Werkstücks durch Hindurchziehen, **gekennzeichnet durch** folgende Verfahrensschritte:
Anordnen des rohrförmigen Bauteils (10) auf dem Schaft (31) eines Durchzugsdorns (32), welcher einen Kopf (36) aufweist, von dem mindestens ein Teil (37) einen größeren Durchmesser hat als mindestens ein Teil der Bohrung (39) des rohrförmigen Bauteils (12);
Einführen des Dornes (32) und des rohrförmigen Bauteils (12) in ein Loch (13) in einem Werkstück (14), in welchem der rohrförmige Bauteil (12) gesetzt werden soll, wobei das nähere Ende des rohrförmigen Bauteils, d.h. das Ende entfernt von dem Kopf des Dorns, innerhalb des Lochs (39) im Werkstück und in einer Entfernung von der näheren Fläche (22) desselben liegt;
Abstützen des näheren Endes des rohrförmigen Bauteils mittels eines ringförmigen Gegenhalters (34), welcher im wesentlichen das gesamte nähere Ende des rohrförmigen Bauteils (12) überdeckt;
Ziehen des Dornkopfes (36) durch einen Teil der Bohrung (39) des rohrförmigen Bauteils (12), um dadurch den weiter entfernt liegenden Teil (49) des rohrförmigen Bauteils (12) in Eingriff mit dem Werkstück (14) aufzuweiten;
und Zurückziehen des ringförmigen Gegenhalters (34) von der Werkstückbohrung (39), um es zu ermöglichen, daß der Dornkopf (36) vollständig durch den Rest der Bohrung (39) des rohrförmigen Bauteils (12) hindurchgelangt, wobei dann der rohrförmige Bauteil (12) axial durch den vorgenannten Eingriff (49) mit dem Werkstück abgestützt ist.

2. Verfahren nach Anspruch 1, dadurch gekennzeichnet, daß fernerhin erfaßt wird, wenn die auf den Dorn (32) aufgebrachte Auszugskraft einen vorbestimmten Wert erreicht, um dadurch das Zurückziehen des Gegenhalters (34) auszulösen.

3. Verfahren nach Anspruch 1 oder 2, dadurch gekennzeichnet, daß die auf den Dorn (32) aufgebrachte Kraft zum Durchziehen seines Kopfes (36) durch den Rest der Bohrung (39) des rohrförmigen Bauteils (12) erhöht wird, nachdem der ringförmige Gegenhalter (34) von der Werkstückbohrung (13) zurückgezogen wurde.

4. Verfahren nach Anspruch 3, dadurch gekennzeichnet, daß erfaßt wird, wenn der ringförmige Gegenhalter (34) von der Werkstückbohrung (13) zurückgezogen wurde, um dadurch die Erhöhung der auf den Dorn (32) aufgebrachten Kraft auszulösen.

5. Verfahren nach Anspruch 1, dadurch gekennzeichnet, daß das Zurückziehen des ringförmigen Gegenhalters (34) durch Eingriff des Dornkopfes (36) mit dem Gegenhalter (34) bewirkt wird, wenn der Dornkopf (36) in oben erwähnter Weise zurückgezogen wird.

6. Verfahren nach einem der vorstehenden Ansprüche, dadurch gekennzeichnet, daß der rohrförmige Bauteil (12) in die Bohrung (13) in dem Werkstück (14) derart eingeführt wird, daß er von dessen entfernt liegendem Ende vorsteht, und daß die Aufweitung des vorstehenden Teils einen Blindkopf (49) hinter dem Werkstück bildet.

7. Verfahren nach einem der vorstehenden Ansprüche, dadurch gekennzeichnet, daß das Zurückziehen des Dornkopfes (36) durch die Bohrung (34) des rohrförmigen Bauteils (12) eine Streckung des rohrförmigen Bauteils bewirkt, derart, daß das naheliegende Ende desselben nach dem Einbau in einer geringeren Entfernung von der naheliegenden Fläche (22) des Werkstücks (14) liegt als ursprünglich (Figur 4), und daß zum Erhalten eines gesetzten rohrförmigen Bauteils (12), bei welchem das naheliegende Ende in einer ersten vorbestimmten Entfernung von der naheliegenden Fläche (22) des Werkstücks liegt, das naheliegende Ende des rohrförmigen Bauteils (12) anfänglich innerhalb der Werkstückbohrung (13) in einer zweiten vorbestimmten Entfernung von der näherliegenden Werkstücksfläche (22) angeordnet wird, wobei die zweite vorbestimmte Entfernung größer ist als die erste vorbestimmte Entfernung (Figur 2).

8. Vorrichtung zum Blindsetzen eines rohrförmigen Bauteils in einem Loch eines Werkstücks in einer Position, welche von der näherliegenden Fläche des Werkstücks entfernt ist, gekennzeichnet durch folgende Bestandteile:
einen ringförmigen Gegenhalter (34) zum Abstützen eines rohrförmigen Bauteils (12) innerhalb des Werkstückloches (39);
Gegenhalterlagereinrichtungen (17, 18, 19) zum anfänglichen Lagern des Gegenhalters (34) in einer Stellung innerhalb des Loches (39) in dem Werkstück;
einen Dorn (32) mit einem Schaft (31), welcher sich durch die Öffnung in dem Gegenhalter erstreckt und einen vergrößerten Kopf (36) aufweist;
Rückzieheinrichtungen (24, 25) zum Zurückziehen des Dornschaftes (31) durch die Gegenhalteröffnung (35), um dadurch den Dornkopf (36) in den naheliegenden Teil der Bohrung (39) des rohrförmigen Bauteils (12) hineinzuziehen, während der rohrförmige Bauteil (12) innerhalb des Loches (39) im Werkstück durch den ringförmigen Gegenhalter (34) gehalten ist, um dadurch mindestens einen Teil des rohrförmigen Bauteils (12), der von dem Gegenhalter (34) mehr entfernt liegt, in Eingriff mit dem Werkstück aufzuweiten;
und Einrichtungen (17, 18) zum Zurückziehen des Gegenhalters (34) in axialer Richtung weg von dem rohrförmigen Bauteil (12), um es zu ermöglichen, daß der Dornkopf (36) vollständig durch den Rest der Bohrung (39) des rohrförmigen Bauteils (12) zurückgezogen wird.

9. Vorrichtung nach Anspruch 8, dadurch gekennzeichnet, daß Einrichtungen (56) vorgesehen sind, um zu erfassen, wenn die Rückzugskraft, die auf den Dorn (32) aufgebracht ist, einen vorbestimmten Wert erreicht, wobei die Erfassungseinrichtungen (56) für die Kraft derart ausgebildet sind, daß sie das vorerwähnte Zurückziehen des Gegenhalters (34) auslösen.

10. Vorrichtung nach Anspruch 8 oder 9, dadurch gekennzeichnet, daß Einrichtung (55) vorgesehen sind, um die auf den Dorn (32) wirkende Kraft zu steigern, um dadurch seinen Kopf (36) durch den Rest der Bohrung (39) des rohrförmigen Bauteils (12) hindurchzuziehen, nachdem der ringförmige Gegenhalter (34) von der Bohrung (39) des rohrförmigen Bauteils (12) in der vorerwähnten Weise zurückgezogen wurde.

11. Vorrichtung nach Anspruch 10, dadurch gekennzeichnet, daß Einrichtung (57, 62) vorgesehen sind, um zu erfassen, wenn der ringförmige Gegenhalter (34) von dem rohrförmigen Bauteil (12) ausreichend weit zurückgezogen wurde, um zu gestatten, daß der Dornkopf (36) vollständig aus der Bohrung (39) des rohrförmigen Bauteils (12) in der vorerwähnten Weise herausgezogen wird, wobei die Erfassungseinrichtungen (57, 62) für das Zurückziehen des Gegenhalters derart ausgebildet sind, daß sie das vorerwähnte Steigern der auf den Dorn (32) ausgeübten Kraft auslösen.

12. Vorrichtung nach Anspruch 8, dadurch gekennzeichnet, daß die Einrichtungen zum Zurückziehen des Gegenhalters (34) weg von dem rohrförmigen Bauteil (12) durch den Dornkopf (36) gebildet sind.

13. Vorrichtung nach einem der vorstehenden Ansprüche 8 bis 12, dadurch gekennzeichnet, daß mit dem Werkstück in Berührung stehende Einrichtungen (19) vorgesehen sind, wobei die Gegenhalterlagereinrichtungen (17, 18, 19) derart ausgebildet sind, daß sie zunächst den Gegenhalter (34) in einer vorbestimmten Stellung bezüglich der das Werkstück berührenden Einrichtungen (19) halten, wodurch, wenn die mit dem Werkstück in Berührung stehenden Einrichtungen (19) in Berührung mit dem Werkstück (14) sind, der Gegenhalter (34) in einer vobestimmten Stellung innerhalb des Werkstückloches (13) gehalten ist und dadurch anfänglich der rohrförmige Bauteil (12) in einer vorbestimmten Stellung innerhalb des Werkstückloches gehalten wird (Figur 2).

## Revendications

1. Procédé de montage aveugle à traversée d'un élément tubulaire dans un trou ménagé dans une pièce, comprenant les étapes de :
positionnement de l'élément tubulaire (12) sur la tige (31) d'un mandrin de traversée (32) qui possède une tête (36), dont au moins une partie (37) possède un diamètre supérieur à au moins une partie du trou (39) de l'élément tubulaire (12);
insertion du mandrin (32) et de l'élément tubulaire (12) dans un trou (13) ménagé dans la pièce (14) dans laquelle l'élément tubulaire (12) doit être monté, avec l'extrémité proximale de l'élément tubulaire, c'est-à-dire l'extrémité opposée à la tête du mandrin, en venant à l'intérieur du trou (39) de la pièce et à distance de la face la plus proche (22) de la pièce;
soutien de l'extrémité la plus proche de l'élément tubulaire au moyen d'une enclume annulaire (34) qui recouvre sensiblement toute l'extrémité proximale de l'élément tubulaire (12);
tirage de la tête (36) du mandrin à travers une partie du trou (39) de l'élément tubulaire (12) de manière à provoquer l'expansion d'au moins la partie distale (49) de l'élément tubulaire (12) et l'amener en engagement avec la pièce (14); et
retrait de l'enclume annulaire (34) du trou (39) de la pièce pour permettre le passage complet de la tête (36) du mandrin à travers le reste du trou (39) de l'élément tubulaire (12), ce dernier étant supporté axialement sous l'effet de son engagement (49), mentionné précédemment, avec la pièce.

2. Procédé selon la revendication 1, comprenant en outre l'étape de détection du moment où la charge de retrait appliquée au mandrin (32) atteint une valeur prédéterminée, de manière à déclencher le retrait de l'enclume (34) comme mentionné précédemment.

3. Procédé selon la revendication 1 ou 2, comprenant en outre l'étape d'accroissement de la force appliquée au mandrin (32) pour tirer sa tête (36) à travers le reste du trou (39) de l'élément tubulaire (12), une fois que l'enclume annulaire (34) a été retirée du trou (13) de la pièce, comme indiqué précédemment.

4. Procédé selon la revendication 3, comprenant en outre l'étape de détection de l'instant où l'enclume annulaire (34) a été retirée du trou (13) de la pièce, de manière à déclencher un accroissement de la force appliquée au mandrin (32) comme mentionné précédemment.

5. Procédé selon la revendication 1, selon lequel le retrait de l'enclume annulaire (34) est exécuté par engagement de la tête (36) du mandrin avec l'enclume (34) lorsque la tête (36) du mandrin est retirée comme mentionné précédemment.

6. Procédé selon l'une quelconque des revendications précédentes, dans lequel l'élément tubulaire (12) est inséré dans le trou (13) ménagé dans la pièce (14) de manière à faire saillie à partir de l'extrémité distante de cette dernière, et selon lequel l'extension de la partie saillante forme une tête aveugle (49) en arrière de la pièce.

7. Procédé selon l'une quelconque des revendications précédentes, selon lequel le retrait de la tête (36) du mandrin à travers le trou (39) de l'élément tubulaire (12) provoque un allongement de l'élément tubulaire de sorte que son extrémité la plus rapprochée après l'installation est à une distance plus faible par rapport à la face la plus proche (22) de la pièce (14), qu'elle ne l'était initialement (figure 4), et selon lequel, pour obtenir un élément tubulaire installé (12) dont l'extrémité la plus proche est située à une distance prédéterminée de la face la plus proche (22) de la pièce, on positionne initialement l'extrémité la plus proche de l'élément tubulaire (12) à l'intérieur du trou (39) de la pièce à une seconde distance prédéterminée de la face la plus proche (22) de la pièce, cette seconde distance prédéterminée étant supérieure à la première distance prédéterminée (figure 2).

8. Dispositif d'installation aveugle à traversée d'un élément tubulaire dans un trou ménagé dans une pièce dan une position le long de ce trou, qui est distante de la face la plus proche de la pièce, lequel dispositif comprend:
une enclume annulaire (34) servant à supporter un élément tubulaire (12) à l'intérieur du trou (39) de la pièce;
des moyens de support d'enclume (17,18,19) pour supporter initialement l'enclume (34) dans une position à l'intérieur du trou (39) de la pièce;
un mandrin (32) possédant une tige (31) s'étendant dans l'ouverture de l'enclume et possédant une tête élargie (36);
des moyens de retrait (24,25) pour retirer la tige (31) du mandrin à travers l'ouverture (35) de l'enclume de manière à tirer la tête (36) du mandrin dans la partie adjacente du trou (39) de l'élément tubulaire (12) alors que ce dernier est supporté à l'intérieur du trou (39) de la pièce par l'enclume annulaire (34), de manière à élargir au moins la partie de l'élément tubulaire (12) qui est la plus distante de l'enclume (34) pour l'amener en engagement avec la pièce; et
des moyens (17,18) pour écarter axialement l'enclume (34) à partir de l'élément tubulaire (12) de manière à permettre le retrait complet de la tête (36) du mandrin à travers le reste du trou (39) de l'élément tubulaire (12).

9. Dispositif selon la revendication 8, comprenant des moyens (56) pour détecter le moment où la charge de retrait appliquée au mandrin (32) atteint une valeur prédéterminée, ces moyens de détection de charge (56) étant agencés de manière à déclencher le retrait de l'enclume (34) comme mentionné précédemment.

10. Dispositif selon la revendication 8 ou 9, comprenant des moyens (55) pour accroître la force appliquée au mandrin (32) pour tirer sa tête (36) à travers le reste du trou (39) de l'élément tubulaire (12), une fois que l'enclume annulaire (34) a été retirée du trou (39) de l'élément tubulaire (12) comme mentionné précédemment.

11. Dispositif selon la revendication 10, comportant des moyens (57,62) pour détecter le moment où l'enclume annulaire (34) a été suffisamment retirée de l'élément tubulaire (12) pour permettre le retrait complet de la tête (36) du mandrin hors du trou (39) de l'élément tubulaire (12) comme mentionné précédemment, les moyens (57,62) de détection du retrait de l'enclume étant agencés pour déclencher l'accroissement de la force appliquée au mandrin (32), comme mentionné précédemment.

12. Dispositif selon la revendication 8, dans lequel les moyens de retrait de l'enclume (34) à partir de l'élément tubulaire (12) comprennent la tête (36) du mandrin.

13. Dispositif selon l'une quelconque des revendications 8 à 12, comprenant un moyen (19) pour venir en contact avec la pièce, dans lequel les moyens de support d'enclume (17,18,19) sont agencés de manière à supporter initialement l'enclume (34) dans une position préderminée par rapport au moyen (19) pour venir en contact avec la pièce, et par conséquent, lorsque lesdits moyens (19) sont en contact avec la pièce (14), supporter l'enclume (34) dans une position prédéterminée à l'intérieur du trou (13) de la pièce, de manière à placer initialement l'élément tubulaire (12) dans une position prédéterminée à l'intérieur du trou de la pièce (figure 2).
